# EUROPEAN PATENT APPLICATION

(11) **EP 4 488 504 A1**
(43) Date of publication of application: **08.01.2025**
(21) Application number: 23184138.8
(22) Date of filing: 07.07.2023
(51) Int. Cl.: F03D 1/06

(54) **METHOD FOR JOINING TWO ROTOR BLADE SEGMENTS OF A WIND TURBINE ROTOR BLADE, BUSHING AND WIND TURBINE ROTOR BLADE**

(71) Applicant: Nordex Energy SE & Co. KG, 22419 Hamburg (DE)
(72) Inventor: Klaubert, Steffen, 22419 Hamburg (DE); Lipka, Thomas, 22419 Hamburg (DE); Festner, Gerald, 22419 Hamburg (DE)
(74) Representative: Epping - Hermann - Fischer

(57) **Abstract**

The invention concerns a method of connecting two rotor blade segments (132, 134) of a wind turbine rotor blade (110), the method comprising the steps of:
- providing a first rotor blade segment (132) and a second rotor blade segment (134), wherein a displaceable thread insert (172) is arranged within the second bushing (142),
- inserting a connecting bolt (146) into the second bushing (142) and axially moving the displaceable thread insert (172) with the connecting bolt (146) into the first state, in which the displaceable thread insert (172) is locked against rotation relative to the corresponding second bushing (142),
- screwing the connecting bolt (146) into the displaceable thread insert (172),
- axially moving the displaceable thread insert (172) into the second state, in which the displaceable thread insert (172) is rotatable relative to the corresponding second bushing (142),
- screwing the connecting bolt (146) into the first bushing (140), and
- tightening the connecting bolt (146) to mechanically connect the two rotor blade segments (132, 134).

The invention also relates to a bushing (142) and a wind turbine rotor blade (110).

## Description

The invention concerns a method for joining two rotor blade segments of a wind turbine rotor blade. The invention also concerns a bushing and a wind turbine rotor blade.

Wind turbines with wind turbine rotor blades are widely known from the state of the art and are used to convert wind energy into electrical energy. A rotor blade can be designed as a split or segmented rotor blade, in which rotor blade segments are arranged and joined together lengthwise to form an entire rotor blade. Mechanical connections are generally used to join the two rotor blade segments. Typically, a plurality of connection elements (so-called inserts, for example cross bolts or bushings) is integrated into the laminate of each rotor blade segment, by means of which the rotor blade segments can be connected to each other, either directly or via one or more suitable intermediate connection pieces. Typically, fastening means or connecting means such as fastening bolts, e.g. screw bolts, or the like are used for a direct connection or for connecting to the one or more intermediate connection pieces. For example, the connection elements are located in the laminate of a respective connecting flange of the rotor blade segments.

A generic structure is known, for example, from international application WO 2015/124568 A1.

Segmented rotor blades are becoming increasingly important and provide advantages, in particular for transport reasons, since the overall length of the rotor blades tends to increase in order to achieve a higher energy output.

One task underlying the present invention is to provide a concept for segmented rotor blades which ensures an easy manufacturing process.

This object is solved by the independent claims and the respective sub-claims.

According to a first aspect, a method of connecting two rotor blade segments of a wind turbine rotor blade is disclosed. The method comprises the steps of:
- providing a first rotor blade segment having at least a first bushing at a first connection end, the first bushing having a first internal thread,
- providing a second rotor blade segment having at least a second bushing at a second connection end, the second connection end being assigned to the first connection end, wherein
   a displaceable thread insert is arranged within the second bushing, the displaceable thread insert comprising a second internal thread,
   the displaceable thread insert is axially displaceable with respect to a longitudinal axis of the second bushing in order to switch the displaceable thread insert between a first state and a second state,
- inserting a connecting bolt into the second bushing and axially moving the displaceable thread insert with the connecting bolt into the first state, in which the displaceable thread insert is locked against rotation relative to the corresponding second bushing,
- screwing the connecting bolt into the second internal thread of the displaceable thread insert while it is in the first state,
- bringing the first connection end of the first rotor blade segment to the second connection end of the second rotor blade segment,
- axially moving the displaceable thread insert with the screwed-in connecting bolt into the second state, in which the displaceable thread insert is rotatable relative to the corresponding second bushing,
- screwing the connecting bolt into the first internal thread of the first bushing, and
- tightening the connecting bolt to mechanically connect the two rotor blade segments to one another at the connection ends. Thus, the wind turbine rotor blade is formed.

The wind turbine rotor blade is formed by two detachably connected rotor blade segments. For this purpose, a connecting bolt, e.g. a screw bolt, is screwed into the first and second bushing in order to firmly connect both rotor blade segments. Optionally, the connecting bolt is pretensioned at a later stage.

During the assembly process according to the inventive method, i.e. during the connection of the rotor blade segments, the displaceable thread insert is axially moved into the first state, in which a rotation of the displaceable thread insert within the second bushing is not possible. This first state can also be defined as rotation stop state. In the first state the connecting bolt can be screwed into the displaceable thread insert, since the displaceable thread insert itself cannot be rotated around a turn axis of the connecting bolt, i.e. it cannot be rotated relative to the second bushing.

Thus, the second bushing is capable of absorbing torques in this first state. In a further step, the displaceable thread insert is axially moved into the second state, in which a rotation of the displaceable thread insert with respect to the bushing is enabled. The second state can also be defined as the rotation state. In this second state of the displaceable thread insert, it is possible to screw the connecting bolt with its other end into the first internal thread of the first rotor blade segment, wherein both the connecting bolt and the displaceable thread insert rotate during screwing. To sum up, in the first state a transitory movement of the displaceable thread insert is enabled, wherein a rotational movement is locked for screwing the connecting bolt into the traversing displaceable thread insert. In the second state, both a transitory movement and a rotational movement of the displaceable thread insert are enabled. In this second state, the displaceable thread insert may be axially displaceable along a predetermined length along the longitudinal axis of the second bushing, wherein the axial movement is limited mechanically.

The described method provides several technical effects and advantages, in particular due to the displaceable thread insert in the second bushing. Due to the axial displaceability of the displaceable thread insert, and thus due to the second internal thread, the at least partially screwed-in connecting bolt can be axially displaced during assembly of the rotor blade segments. This greatly simplifies insertion and threading-in of the connecting bolt into the first rotor blade segment. In particular, it is not necessary for an installer to consider certain rotation angles and/or screw-in lengths for the connecting bolt during assembly.

The connecting bolt can be mounted without constraining forces. Subsequent bolting (tightening) or maintenance of the connections is also made particularly easy. Furthermore, assembly from the inside or outside of the blade is possible.

The described second bushing ensures that the displaceable thread insert does not detach from the connecting bolt during the assembly process, thus exhibiting much higher assembly reliability.

Further, a second bushing can be made very cost-efficiently, since the displaceable thread insert in particular can be manufactured easily, especially without complex geometries. For example, a design suitable for production can be chosen because of a maintained ratio of cutter diameter to cutter length ≤ 1:4 (max 1:5). Further, thread lengths of the connecting bolt can be made shorter, which also contributes to cost-efficiency. Furthermore, the second bushing and the displaceable thread insert allow for comparatively high tolerances, which contribute to an easy installation process. For example, compared to the same installation space and surface pressure, a tolerance increase up to 75% is possible, for example ±1.75 mm in total (exemplarily compared to a total of ± 1.0 mm) .

The displaceable thread insert can also be defined as a displaceable nut or displaceable thread nut.

The first internal thread is stationary with respect to the corresponding first bushing.

For example, the second bushing is designed as a rotationally symmetrical bushing with a typical bushing runout. For example, the displaceable thread insert is an internal cylindrical element, which is accommodated in the second bushing in a form-fit manner and can be moved in the second bushing on a traversing path in longitudinal direction and rotationally, but can be restricted in its rotational movement, e.g. by means of a rotation stop located inside the second bushing.

For example, the connecting bolt has a tool engagement region, in particular a hexagon or hexagonal-shaped region, for a tool to engage the connecting bolt to turn it for screwing into the first and second bushings. Optionally, a pressure piece is arranged between the two connection ends of the two rotor blade segments. The pressure piece is formed as a sleeve and is applied to the connecting bolt, in particular the connecting bolt is guided through the pressure piece. The pressure piece, for example, has at least one opening or recess so that the above-mentioned tool engagement region is accessible from outside.

It is noted at this point that herein referral is made to only one first and one corresponding second bushing. Of course, a plurality of first bushings and second bushings may be provided, each respective pair of first and second bushings being connected via a respective connecting bolt in the manner described above. The above, e.g. the functions, features and advantages, apply to the plurality of connections.

According to an embodiment, the displaceable thread insert comprises two sections, the first section being cylindrically formed and the second section having a polygonal-shaped outer contour serving as an engagement element. For example, the polygonal-shaped outer contour is hexagonally shaped. This contributes to the above functions and advantages.

According to an embodiment, in the first state the displaceable thread insert engages the corresponding second bushing in a form-fit manner via the engagement element. Thus, a reliable rotation stop is provided.

According to an embodiment, the second bushing has an anti-rotation component for engagement with the displaceable thread insert in the first state. For example, the anti-rotation component engages with the displaceable thread insert in a form-fit manner as above. This contributes to a reliable rotation stop.

According to an embodiment, the anti-rotation component is a separate component with respect to the second bushing, and is fixed within the second bushing. This contributes to an easy manufacturing and mounting of the second bushing and the anti-rotation component. In particular, the anti-rotation component is stationarily fixed within the second bushing. For example, the anti-rotation component is pressed, welded, shrunk, glued or otherwise fixed into the second bushing.

According to an embodiment, the anti-rotation component has an inner polygonal shape for engagement with the engagement element of the displaceable thread insert having an outer polygonal shape.

According to an embodiment, the second bushing has an inner abutment surface to limit the axial displacement of the displaceable thread insert within the second bushing in the second state. In particular, the displaceable thread insert can be moved axially over a predetermined distance between a first end and an opposite second end. The inner abutment surface defines the first end. The second end, for example, serves as a further abutment surface, which is contacted in the first state. Preferably the second end or respectively the further abutment surface is part of the anti-rotation element. Thus, the axial movement of the displaceable thread insert is spatially limited between two stops, namely this anti-rotation component and the inner abutment surface.

According to an embodiment, in the connected state of the rotor blade segments via the connecting bolt, the displaceable thread insert abuts against the inner abutment surface. Thus, when the connecting bolt is screwed tightly into the pair of bushings in the final assembly state, the displaceable thread insert abuts at the first end in the second state. The inner abutment surface is designed to enable a high surface pressure for the displaceable thread insert.

According to an embodiment, the displaceable thread insert is axially displaceably guided in a cylindrical inner section within the second bushing in such a way that a clearance fit is formed. The clearance fit is designed to compensate for an axis offset between the inserts on the root and tip side. For example, an axis offset of up to 5 mm can be compensated. For example, the clearance fit is a circumferential gap of about 1.5 to 2.0 mm, preferably 1.75 mm. Especially, the cylindrical shape of the displaceable thread insert favors the dimensions of the clearance.

According to an embodiment, the method comprises the further step of:
- securing the connecting bolt against unscrewing when it is being screwed into the displaceable thread insert.

According to an embodiment, a thread lock is provided for securing. For example, an adhesive lock such as Loctite ^{®} is used. Optionally, other solutions are possible, e.g. mechanical solutions such as a retaining ring.

According to a second aspect a bushing for a wind turbine rotor blade is disclosed. A displaceable thread insert with an internal thread is disposed within the bushing. The displaceable thread insert is axially displaceable with respect to a longitudinal axis of the bushing in order to switch the displaceable thread insert between a first state and a second state. In the first state, the displaceable thread insert is locked against rotation relative to the bushing. In the second state, the displaceable thread insert is rotatable relative to the bushing.

The bushing essentially enables the above-mentioned advantages and functions. The above-described features and embodiments according to the first aspect similarly apply to the bushing, which is referred to as "second" bushing above.

### Claim 14

According to an embodiment, the displaceable thread insert comprises two sections, the first section being cylindrically formed and the second section having a polygonal-shaped outer contour serving as an engagement element. We refer to the above functions and advantages.

### Claim 15

According to an embodiment, in the first state, the displaceable thread insert engages the bushing in a form-fit manner via the engagement element. We refer to the above functions and advantages.

### Claim 16

According to a third aspect, a wind turbine rotor blade is disclosed which is manufactured according to any one of the above-described embodiments of the inventive method.

The wind turbine rotor blade essentially enables the above-mentioned advantages and functions. The above-described features and embodiments according to the first and second aspect similarly apply.

Further advantages, features and functions, which are explained in connection with the figures, are given in the following exemplary embodiment of the invention. Identical, similar or similarly acting elements are provided with the same reference signs in the figures.

In the figures:
Figure 1 shows a schematic view of a wind turbine,
Figure 2 shows a schematic view of a split rotor blade with two rotor blade segments,
Figure 3 shows a schematic sectional view of an exemplary bolt connection of two rotor blade segments,
Figures 4 and 5 show perspective views of a second bushing according to an embodiment of the invention,
Figure 6 shows a cross-sectional view of the second bushing,
Figures 7 and 8 show two views of an anti-rotation element of the second bushing,
Figures 9 and 10 show two views of a displaceable thread insert of the second bushing,
Figure 11 exemplarily shows a perspective view of a bolt connection of two rotor blade segments with the second bushing,
Figure 12 shows a cross-sectional view of the connection according to figure 11,
Figures 13 to 17 show different assembly states when connecting two rotor blade segments according to an embodiment of the invention,
Figure 18 shows a cross-sectional view of a second bushing in a final mounted state, and
Figure 19 shows a schematic flow diagram of a method of connecting two rotor blade segments according to an embodiment of the invention.

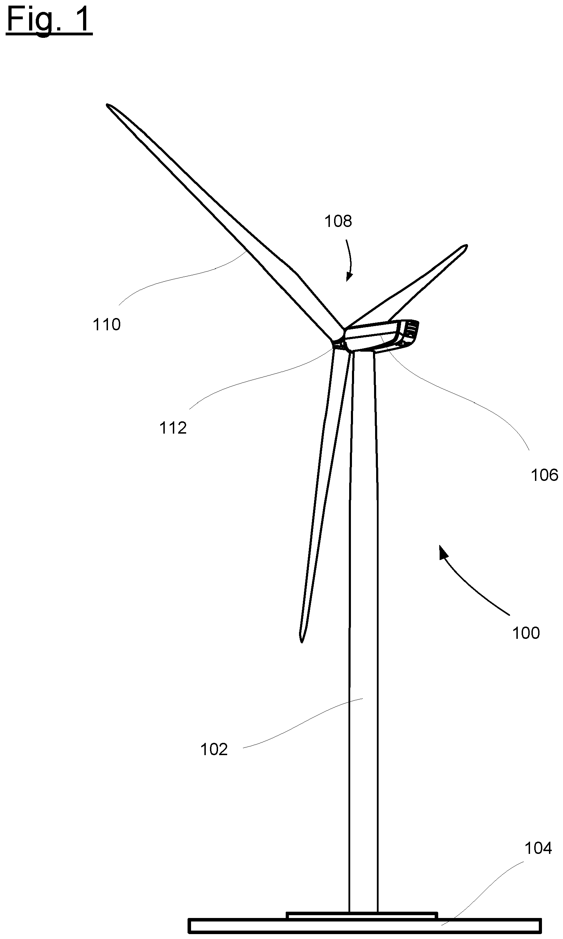

Figure 1 shows a schematic view of a wind turbine 100, which comprises a tower 102. The tower 102 is fixed to the ground by means of a foundation 104. A nacelle 106 is rotatably mounted at one end of the tower 102 opposite to the ground. The nacelle 106, for example, comprises a generator which is coupled to a rotor 108 via a rotor shaft (not shown). The rotor 108 comprises one or more (wind turbine) rotor blades 110, which are arranged on a rotor hub 112.

During operation, the rotor 108 is set in rotation by an air flow, for example wind. This rotational movement is transmitted to the generator via the rotor shaft and, if necessary, a gearbox. The generator converts the kinetic energy of the rotor 108 into electrical energy.

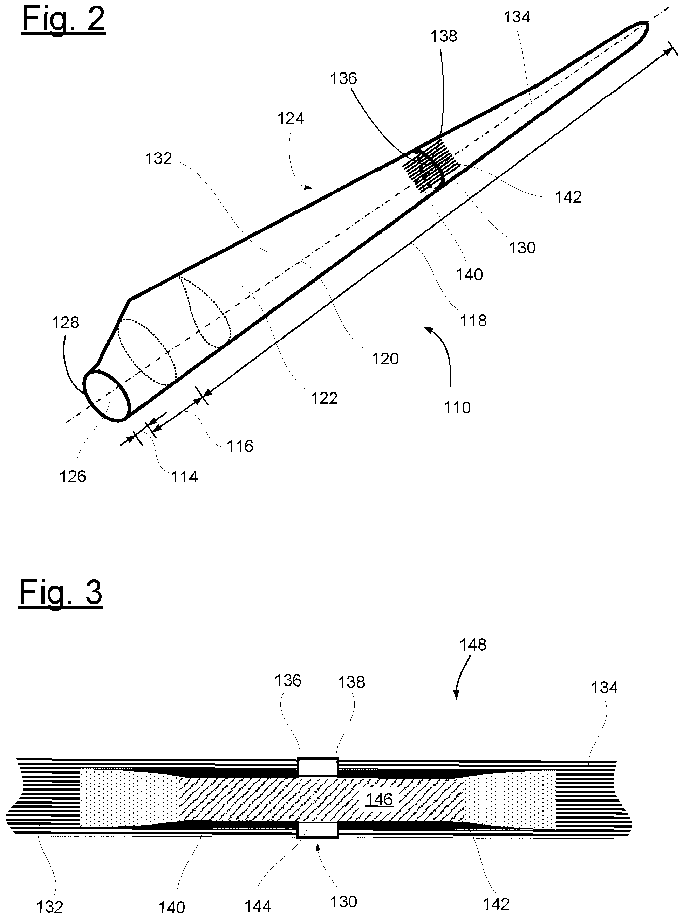

Figure 2 shows an exemplary wind turbine rotor blade 110. The rotor blade 110 has the shape of a conventional rotor blade and has a rotor blade root area 114 facing the rotor hub 112. The rotor blade root area 114 typically has an essentially circular cross-section. The rotor blade root area 114 is followed by a transition area 116 and a profile area 118 of rotor blade 110. The rotor blade 110 has a pressure side 122 and an opposite suction side 124 with respect to a longitudinal extension direction 120 (also main extension direction). The rotor blade 110 is essentially hollow inside.

A rotor blade connection end 126 with a flange connection 128 is provided in the rotor blade root area 114, by means of which the rotor blade 110 is mechanically connected to a pitch bearing or an extender.

The rotor blade 110 comprises a division area 130 where a blade root-side rotor blade segment 132 (first rotor blade segment) and a blade tip-side rotor blade segment 134 (rotor blade segment) are connected to each other. For this purpose, both segments 132, 134 comprise a respective connection area 136, 138 (also connection ends). The rotor blade 110 is thus a split rotor blade as described above. Embedded into each connection end 136, 138 is a multitude of bushings 140 and 142, which are arranged according to the profile of the rotor blade 110 (in circumferential direction) and comprise internal threads for the reception of connecting bolts 146 to connect the segments 132, 134 (see figure 3). The bolts 146 are also called bearing bolts or screw bolts. In the present example, the first bushings 140 comprise right-hand threads (first internal threads) and the second bushings 142 left-hand threads (second internal threads) or vice versa. One or both connection ends 136, 138 is realized for example as a flange insert, which is inserted as a prefabricated insert (with the bushings embedded therein) into a production mould for the manufacture of the rotor blade 110. However, it is also conceivable that no flange insert is provided and the bushings are embedded and laminated directly into the rotor blade half shells. The bushings are metal bushings, e.g. steel bushings, for example.

Figure 3 shows a schematic sectional view in a partial area of two connected rotor blade segments 132, 134 at the division area 130, where a single bolt connection 148 is exemplarily shown. The connecting bolt 146 is screwed into a pair of aligned first and second bushings 140, 142 to mechanically connect the two connection ends 136, 138 and thus the two rotor blade segments 132, 134. Likewise, the further pairs of first and second bushings 140, 142 are connected by respective connecting bolts 146.

Optionally as shown in figure 3, a pretensioning unit 144 is clamped between the two connection ends 136, 138 per bolt connection 148. The bolts 146 can be preloaded with the help of the pretensioning units 144. For example, a pretensioning unit 144 is a hydraulic nut.

In the following, an improved connection of the two rotor blade segments 132, 134 is described, in particular with respect to second bushings 142 according to an embodiment of the invention.

Please note that in the following description of embodiments of the invention reference is made to one single second bushing 142 or a single bolt connection 148. Of course, the description below is applicable to a multitude of bolt connections 148 comprising such second bushings 142. Furthermore, the first bushings 140 and second bushings 142 can be switched, i.e. the first bushings 140 can be installed in the second rotor blade segment 134, whereas the second bushings 142 can be installed in the first rotor blade segment 132.

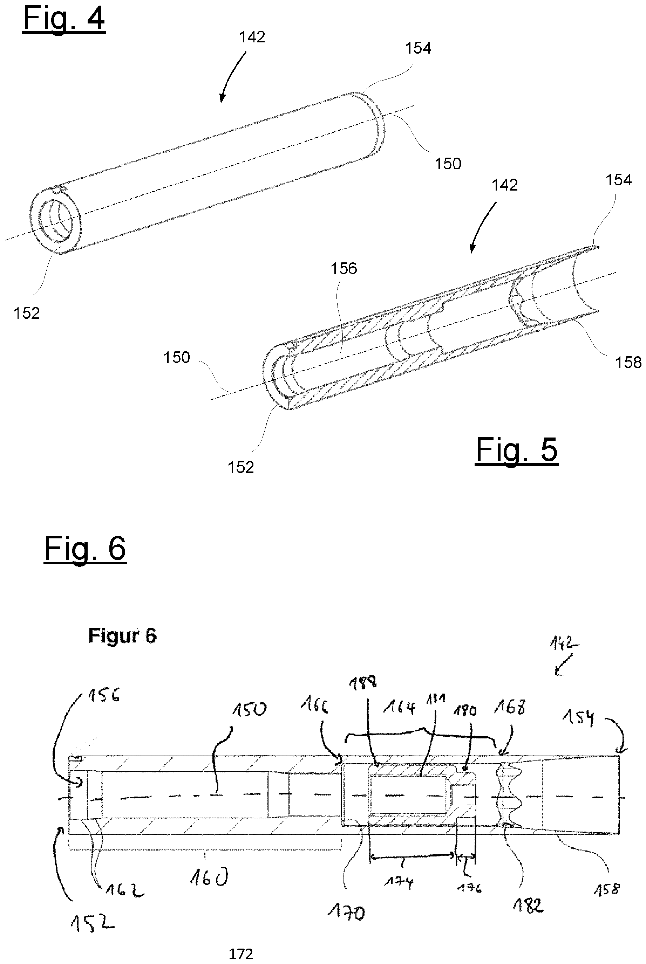

Figure 4 shows a perspective view of one second bushing 142, which is designed as a cylindrical metal bushing. Figure 5 shows the second bushing 142 in a cross-sectional view along a central longitudinal axis 150 of the second bushing 142. The central longitudinal axis 150 can also be seen as a screw axis or turn axis for a connecting bolt 146 to be screwed into the second bushing 142. The second bushing 142 comprises a first bushing end 152 and an opposite second bushing end 154. The first bushing end 152 faces the second connection end 138, whereas the second bushing end 154 faces away from the second connection end 138, in a state embedded in the second rotor blade segment 134. The second bushing 142 has a through-hole 156 and a bushing runout 158 at the second bushing end.

Figure 6 shows a cross-sectional side view of the second bushing 142. Beginning with the first bushing end 152, the second bushing 142 comprises a receiving section 160 for the connecting bolt 146, in particular for a necessary length section of the bolt 146. The receiving section 160 varies with respect to an inner diameter along the central longitudinal axis 150 and forms inner surfaces 162 for a form-fit engagement with the connecting bolt 146.

The second bushing 142 further comprises a cylindrical inner section 164. With respect to the central longitudinal axis 150, the cylindrical inner section 164 is limited by a first end 166 and an opposite second end 168. An inner abutment surface 170 is formed at the first end 166.

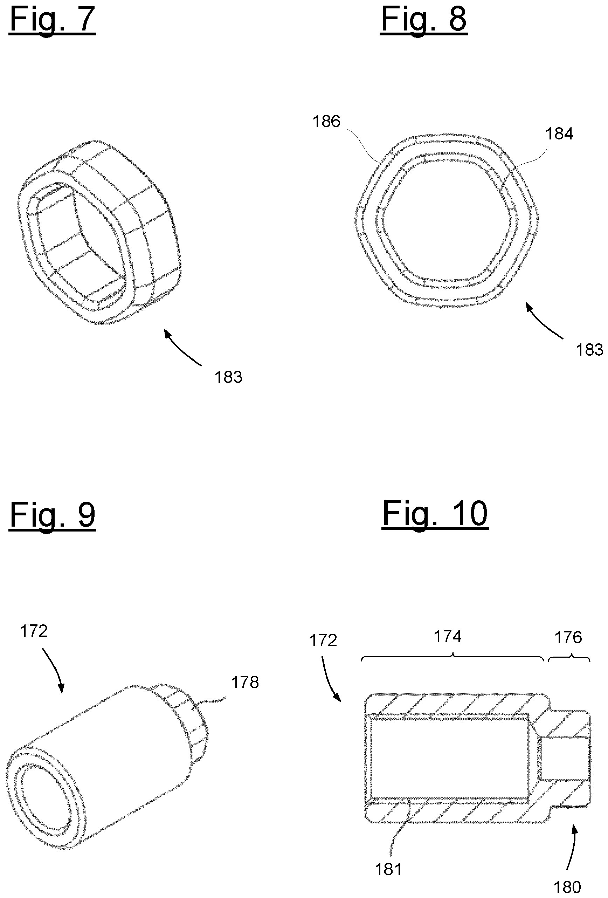

Within the cylindrical inner section 164 the second bushing 142 comprises a displaceable thread insert 172. The displaceable thread insert 172 can be seen as a moveable thread nut. The displaceable thread insert 172 is axially moveable along the central longitudinal axis 150 within the cylindrical section 164, i.e. along a screw axis or middle axis of a connecting bolt 146. With respect to figures 9 and 10, the displaceable thread insert 172 comprises two sections along its axial extension along the axis 150. A first section 174 is cylindrically formed and designed to be displaceably guided by the cylindrical inner section 164 in a form-fit manner. The second section 176 has a polygonal-shaped outer contour 178 serving as an engagement element 180. In the present embodiment, the polygonal-shaped outer contour 178 is hexagonally shaped. The displaceable thread insert 172 comprises a second internal thread 181 (as mentioned above with respect to figure 3) into which the connecting bolt 146 is screwed.

In the present embodiment, the displaceable thread insert 172 is axially displaceably guided into the cylindrical inner section 164 within the second bushing 142 in such a way that a clearance fit 188 is formed as described above.

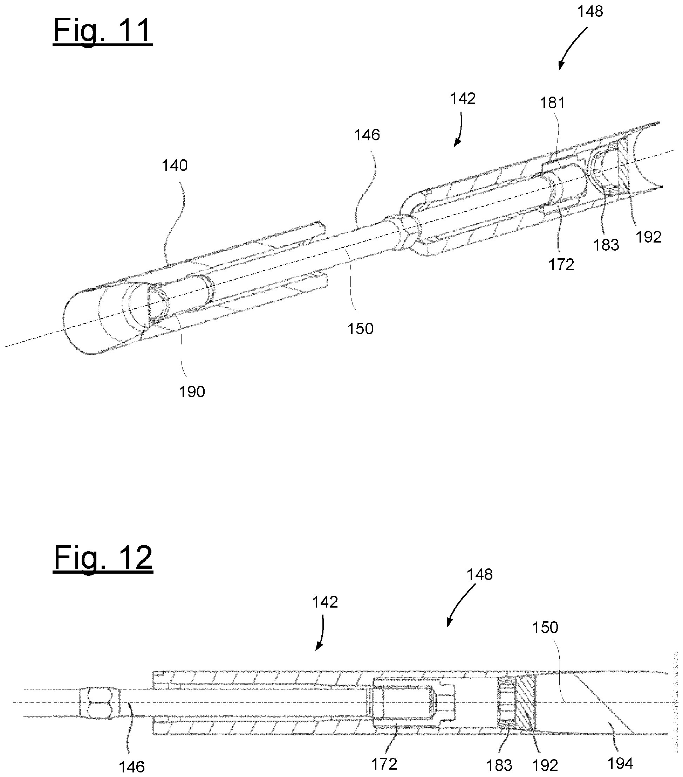

At the second end 168 of the cylindrical inner section 164, the second bushing 142 further has an inner polygonal shape 182 which is adapted to accommodate an anti-rotation component 183. The anti-rotation component 183 is a separate component fixed to be stationary, i.e. non-moveable in any direction, within the second bushing 142 (see figure 11). The anti-rotation component 183 (as shown in figures 7 and 8) has an inner polygonal shape 184, which is hexagonal in the present embodiment and which is adapted to the polygonal-shaped outer contour 178 of the displaceable thread insert 172. The anti-rotation component 183 also has a polygonal-shaped outer contour 186, which is hexagonal in the present embodiment. The polygonal-shaped outer contour 186 is designed to be in form-fit engagement with the inner polygonal shape 182 inner contour of the second bushing 142.

The displaceable thread insert 172 is axially displaceable between the first and second ends 166, 168. Thereby, the displaceable thread insert 172 is switchable between a first state and a second state.

In the first state, the displaceable thread insert 172 is moved towards or against the second end 168 to engage the anti-rotation element 183 with the engagement element 180 in a form-fit manner. Due to the engagement of the inner polygonal shape 184 of the anti-rotation element 182 and the polygonal-shaped outer contour 178 of the displaceable thread insert 172 in this first state, the displaceable thread insert 172 is locked against rotation with respect to the second bushing 142, e.g. around the central longitudinal axis 150. However, the displaceable thread insert 172 may be axially moved in the first state towards the first end 166.

In the second state, the displaceable thread insert 172 is not in engagement with the anti-rotation element 182. Thus, the displaceable thread insert 172 is rotatable relative to the corresponding second bushing 142. Also, in the second state the displaceable thread insert 172 can be axially moved over a certain region along the central longitudinal axis 150, since a length of the first section 174 of the displaceable thread insert 172 is shorter than a length of the cylindrical inner section 164 between the first and second ends 166, 168.

In the present embodiment, the second bushing 142 is a turned part except for the inner polygonal shape 182. However, the inner polygonal shape 182 is adapted to production-appropriate ratios of milling diameter to milling cutter length and therefore does not require any special production measurements (the ratio is for example preferably less or equal to 1:4, maximum 1:5).

The described second bushing 142 enables the above-mentioned functions and advantages to connect two rotor blade segments 132, 134. Figures 11 and 12 exemplarily show such a bolt connection 148 of a segmented wind turbine blade 110. A connecting bolt 146 is screwed into a stationary fixed, first internal thread 190 (as mentioned above) of the first bushing 140 of the first rotor blade segment 132 (not shown) and the second internal thread 181 of the second bushing 142 of the second rotor blade segment 134 (not shown). As can be seen, the anti-rotation component 183 is fixed within the second bushing 142.

As further shown in figures 11 and 12, sealing plugs 192 are provided, which prevent the entrance of resin during embedding of the bushings into a surrounding laminate (not shown). Further, a core material 194 can be provided. These elements will not be further discussed here.

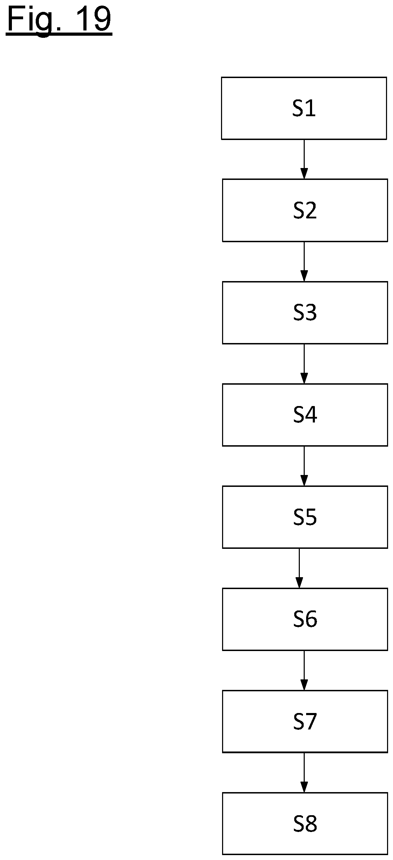

The following describes a method of joining the two rotor blade segments 132 and 134 of the rotor blade 110 according to an embodiment of the invention with reference to figures 12 to 19, wherein figure 19 shows a schematic flow diagram of the method. It is noted that for the sake of clarity no details of the rotor blade 110 or its segments, e.g. laminate structures, are shown or described.

In a first step S1, the first rotor blade segment 132 is provided. The first rotor blade segment 132 has at least a first bushing 140 at the first connection end 136, the first bushing 140 having a first internal thread 190.

In a second step S2, the second rotor blade segment 134 is provided, which has at least a second bushing 142 at the second connection end 138. As is clear from the above, the connection ends 136, 138 are assigned to each other. The second bushing 142 is configured as described above and thus comprises the displaceable thread insert 172.

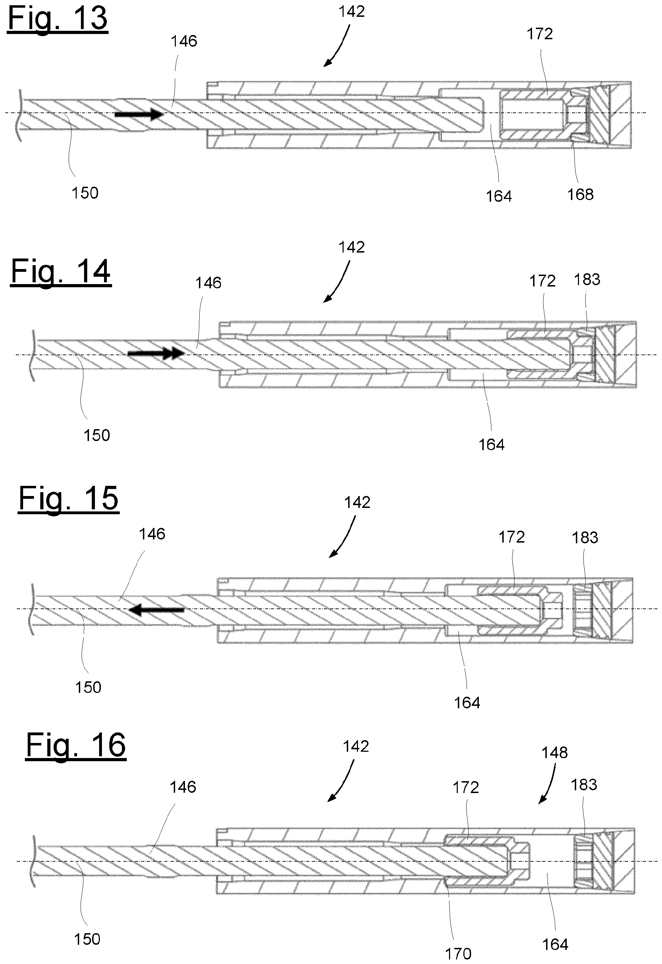

With respect to figure 13, in a next step S3, a connecting bolt 146 is inserted into the second bushing 142. In this step the displaceable thread insert 172 is axially moved (see black arrow) into the first state by means of the bolt 146, if is not already, e.g. by incidence. In the first state, the displaceable thread insert 172 is pushed axially against the second end 166 of the cylindrical inner section 164 against an abutment surface formed at the anti-rotation element 183. Thereby, the displaceable thread insert 172 engages the anti-rotation element 183 as described above in order that the displaceable thread insert 172 is locked against rotation relative to the corresponding second bushing.

With respect to figure 14, in a next step S4 the connecting bolt 146 is screwed into the second internal thread 181 of the displaceable thread insert 172 while it is in the first state. The bolt 146 is provided with a corresponding left-hand thread.

After screwing-in the connecting bolt 146 with an appropriate torque, for example until the anti-rotation element 183 blocks a further screwing-in, the connecting bolt 146 can now be moved translationally out of the first state and then translationally and/or rotationally within the cylindrical inner section 164 without the displaceable thread insert 172 detaching from the bolt 146 (see figure 15).

For an even better fixation of the displaceable thread insert 172 on the bolt 146, the bolt 146 can be secured against unscrewing, e.g. with an adhesive lock as mentioned above. Such an adhesive lock is vibration-resistant and ensures that the torque is applied securely during assembly and operation, but can be released for disassembly.

In a next step S5, the first connection end 136 of the first rotor blade segment 132 is brought to the second connection end 138 of the second rotor blade segment 134 (not shown).

With respect to figure 15, in a next step S6, the displaceable thread insert 172 is axially moved with the screwed-in connecting bolt 146 out of the first state into the second state, in which the displaceable thread insert 172 is rotatable relative to the corresponding second bushing 142.

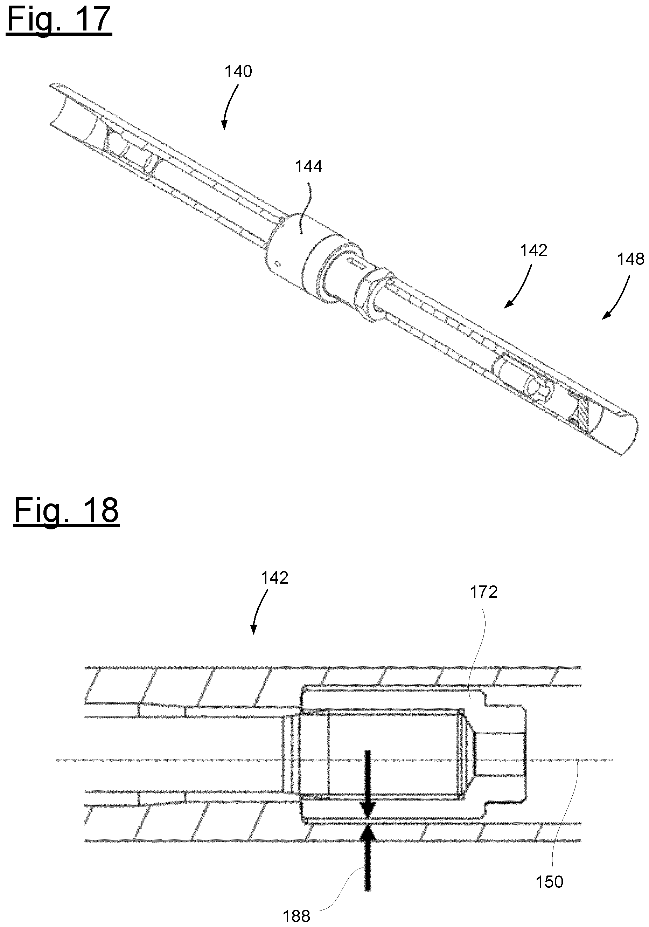

In a next step S7, the connecting bolt 146 is screwed into the first internal thread 190 of the first bushing 140 (see figure 11 or 17). The displaceable thread insert 172 has a particularly positive effect in this step, as it cannot come loose from the connecting bolt 146 without using the anti-rotation component 183.

As soon as the connecting bolt 146 engages in the first bushing 140 with its fixed internal thread 190, both blade segments 132, 134 can be pushed further together, and the connecting bolt 146 at the end with the displaceable thread insert 172 moves slightly back again, i.e. towards the anti-rotation component 183.

With respect to figure 16, in a further step S8, the connecting bolt 146 is tightened to mechanically connect the two rotor blade segments 132, 134 to one another at the connection ends 136, 138. In order to tighten the bolt connection 148, in the present embodiment the entire bolt 146 is turned clockwise until the displaceable thread insert 172 abuts against the inner abutment surface 170, wherein a surface pressure is established. Now, the segments of the wind turbine rotor blade 110 are connected.

The final mounting state is also shown in figure 17. Figure 17 further exemplarily shows the optional pretensioning units 144 in the manner of a hydraulic nut. With such a pretensioning unit, the whole connection can be preloaded after tightening the bolt connection 148. It is noted that a pretensioning unit 144 is arranged on the respective connecting bolt 146 prior to it being screwed into the first bushing 140.

Of course, as mentioned above, a plurality of first bushings 140, second bushings 142 and respective connecting bolts 146 is provided, wherein the above-described method is performed analogously, in particular simultaneously.

Further, it is noted that adjacent bushings of a blade segment 134 (and 132) of a half shell usually have a position tolerance of ±1.5mm. Thus, when both blade segments 132, 134 are aligned with each other, the probability is very high that the central longitudinal axes 150 of the corresponding first and second bushings 140, 142 are not collinear with a rotational axis of the respective connecting bolt 146, but deviate by at least 1.5 mm, not including further positioning tolerances. A connecting bolt 146 would have to be able to shift its rotational axis relative to the central longitudinal axes 150 of the respective bushing 140, 142, i.e. its insertion axis, as far as possible to compensate for this tolerance as otherwise the connecting bolt 146 would be screwed into the respective thread 181, 190 at an angle and get stuck. If it would nevertheless be possible to screw in the bolt 146, the bolt 146 would bend with several 100kN when the connection is pretensioned. The described second bushing 142 with the displaceable thread insert 172 is therefore particularly advantageous since the displaceable thread insert 172 has a clearance fit 188 around the longitudinal axis, as can be seen in detail in figure 18. The displaceable thread insert 172 with its cylindrical outer shape of the first section 174 has a comparatively high tolerance with the given installation space and surface pressure with, e.g. an absolute value about ±1.75 mm in total.

The above-described second bushing 142, the described method and the manufactured wind turbine blade 110 enable the functions and advantages as indicated above, in particular in the general part of this writing.

It is noted that the described wind turbine rotor blade 110 including the first and second segments 132, 134 and the first and second bushings 140, 142, can be designed differently, as long as a displaceable thread insert 172 and features are provided according to any of the above-described embodiments to ensure the described function and advantages. For example, the anti-rotation component 183 can be formed integrally with the second bushing 183. Further, the anti-rotation component 183 can be fixed within the second bushing 142 in different ways, as long as it is held stationary.

### Reference signs

- 100: wind turbine
- 102: tower
- 104: foundation
- 106: nacelle
- 108: rotor
- 110: rotor blade
- 112: rotor hub
- 114: rotor blade root area
- 116: transition area
- 118: profile area
- 120: longitudinal extension direction
- 122: pressure side
- 124: suction side
- 126: rotor blade connection end
- 128: flange connection
- 130: division area
- 132: first rotor blade segment
- 134: second rotor blade segment
- 136: first connection end
- 138: second connection end
- 140: first bushing
- 142: second bushing
- 144: pretensioning unit
- 146: connection bolt
- 148: bolt connection
- 150: middle longitudinal axis
- 152: first bushing end
- 154: second bushing end
- 156: through-hole
- 158: runout
- 160: receiving section
- 162: inner surface
- 164: cylindrical inner section
- 166: first end
- 168: second end
- 170: inner abutment surface
- 172: displaceable thread insert
- 174: first section
- 176: second section
- 178: polygonal-shaped outer contour
- 180: engagement element
- 181: second internal thread
- 182: inner polygonal shape (second bushing)
- 183: anti-rotation component
- 184: inner polygonal shape (anti-rotation element)
- 186: polygonal-shaped outer contour (anti-rotation element)
- 188: clearance fit
- 190: first internal thread
- 192: sealing plug
- Sn: Step

## Claims

1. Method of connecting two rotor blade segments (132, 134) of a wind turbine rotor blade (110), the method comprising the steps of:
- providing a first rotor blade segment (132) having at least a first bushing (140) at a first connection end (136), the first bushing (140) having a first internal thread (190),
- providing a second rotor blade segment (134) having at least a second bushing (142) at a second connection end (138), the second connection end (138) being assigned to the first connection end (136), wherein
a displaceable thread insert (172) is arranged within the second bushing (142), the displaceable thread insert (172) comprising a second internal thread (158),
the displaceable thread insert (172) is axially displaceable with respect to a longitudinal axis (150) of the second bushing (142) in order to switch the displaceable thread insert (172) between a first state and a second state,
- inserting a connecting bolt (146) into the second bushing (142) and axially moving the displaceable thread insert (172) with the connecting bolt (146) into the first state, in which the displaceable thread insert (172) is locked against rotation relative to the corresponding second bushing (142),
- screwing the connecting bolt (146) into the second internal thread (181) of the displaceable thread insert (172) while it is in the first state,
- bringing the first connection end (136) of the first rotor blade segment (132) to the second connection end (138) of the second rotor blade segment (134),
- axially moving the displaceable thread insert (172) with the screwed-in connecting bolt (146) into the second state, in which the displaceable thread insert (172) is rotatable relative to the corresponding second bushing (142),
- screwing the connecting bolt (146) into the first internal thread (190) of the first bushing (140), and
- tightening the connecting bolt (146) to mechanically connect the two rotor blade segments (132, 134) to one another at the connection ends (136, 138).

2. Method according to claim 1, wherein the displaceable thread insert (172) comprises two sections, the first section (174) being cylindrically formed and the second section (176) having a polygonal-shaped outer contour (178) serving as an engagement element (180).

3. Method according to claim 2, wherein, in the first state, the displaceable thread insert (172) engages the corresponding second bushing (142) in a form-fit manner via the engagement element (180).

4. Method according to any one of the preceding claims, wherein the second bushing (142) has an anti-rotation component (183) for engagement with the displaceable thread insert (172) in the first state.

5. Method according to claim 4, wherein the anti-rotation component (183) is a separate component with respect to the second bushing (142), and is fixed within the second bushing (142) .

6. Method according to claim 4 or 5, wherein the anti-rotation component has an inner polygonal shape (184) for engagement with the engagement element (180) of the displaceable thread insert (172).

7. Method according to any one of the preceding claims, wherein the second bushing (142) has an inner abutment surface (170) to limit the axial displacement of the displaceable thread insert (172) within the second bushing (142) in the second state.

8. Method according to claim 7, wherein, in the connected state of the rotor blade segments (132, 134) via the connecting bolt (146), the displaceable thread insert (172) abuts against the inner abutment surface (170).

9. Method according to any one of the preceding claims, wherein the displaceable thread insert (172) is axially displaceably guided in a cylindrical inner section (164) within the second bushing (142) in such a way that a clearance fit (188) is formed.

10. Method according to any one of the preceding claims, comprising the further step of:
- securing the connecting bolt (146) against unscrewing when it is being screwed into the displaceable thread insert (172) .

11. Method according to claim 10, wherein a thread lock is provided for securing.

12. Bushing (142) for a wind turbine rotor blade (110), within which a displaceable thread insert (172) with an internal thread (181) is disposed, wherein
- the displaceable thread insert (172) is axially displaceable with respect to a longitudinal axis (150) of the bushing (142) in order to switch the displaceable thread insert (172) between a first state and a second state,
- in the first state, the displaceable thread insert (172) is locked against rotation relative to the bushing (142), and
- in the second state, the displaceable thread insert (172) is rotatable relative to the bushing (142).

13. Bushing (142) according to claim 12, wherein the displaceable thread insert (172) comprises two sections, the first section (174) being cylindrically formed and the second section (176) having a polygonal-shaped outer contour (178) serving as an engagement element (180).

14. Bushing according to claim 13, wherein, in the first state, the displaceable thread insert (172) engages the bushing (142) in a form-fit manner via the engagement element (180) .

15. Wind turbine rotor blade (110) manufactured according to the method of claims 1 to 11.
